# EUROPEAN PATENT SPECIFICATION

(11) **EP 0 240 771 B1**
(45) Date of publication and mention of the grant of the patent: **11.08.1993**
(21) Application number: 87103711.5
(22) Date of filing: 13.03.1987
(51) Int. Cl.: B29C 33/30, B29C 33/14, B29C 67/22, F25D 23/06

(54) **Method and apparatus for the manufacture of housings for refrigerating appliances**
Verfahren und Vorrichtung zur Herstellung von Gehäusen für Kühlschränke
Procédé et dispositif pour la fabrication de cuve pour réfrigérateurs

(30) Priority: 19.03.1986 IT 4571086
(43) Date of publication of application: 14.10.1987
(73) Proprietor: INDUSTRIE ZANUSSI S.p.A., I-33170 Pordenone (IT)
(72) Inventor: Salamon, Aldo, I-33080 Roveredo in Piano Pordenone (IT); De Nardi, Ireneo, I-31016 Cordignano Treviso (IT); Pagura, Francesco, I-33080 Castions die Zoopla Pordenone (IT)
(74) Representative: Grünecker, Kinkeldey, Stockmair & Schwanhäusser Anwaltssozietät

(56) References cited:
- EP-A- 0 131 345
- FR-A- 2 143 321
- GB-A- 1 098 447
- US-A- 3 091 946
- US-A- 3 155 751
- US-A- 3 298 656
- US-A- 3 431 601
- US-A- 3 642 400
- US-A- 3 816 051
- US-A- 4 099 812

## Description

The present invention relates to a method and an apparatus for the manufacture of refrigerating cabinets, as set forth in the preamble of claim 1 and 5, respectively. Such method and apparatus is known from US-A 3 298 656.

As generally known, the housings of refrigerating appliances such as refrigerators, freezers and the like are composed of an inner casing of a heat-formed synthetic material and outer walls assembled about the inner casing with a layer of ended plastic material interposed therebetween. The manufacture of such housings thus requires a sequence of steps substantially consisting in:
heat-forming a panel of plastic material for obtaining an inner casing of suitable shape,
mounting the inner casing on a rigid core and assembling the outer walls about the inner casing so as to leave a hollow space between the casing and the walls,
pre-heating the thus obtained assembly, and
injecting an insulating foamed material into the hollow space with the use of suitable retention or foam-injection moulds.

The components assembled during the various steps are advanced by the use generally of roller conveyors, and the advance along the full length of the assembly line requires a complicated coordination and control system.

US-A 3,298,656 mentioned above describes a foam insulation forming fixture for refrigerators and freezers which includes a support structure with core modules mounted on it. The core modules are adapted to be modified in size and structure to handle various sizes of production devices.

It is the main object of the present invention to render the process of manufacturing housings for refrigerating appliances more rational and flexible and to propose a versatile apparatus adaptable to different types of housings so as to permit the assembly, the handling and the foam-injection operations to be carried out in a simplified and controllable manner to thereby permit some of the more difficult and delicate manufacturing steps to be automatized.

A further object of the invention is to propose a novel apparatus for eliminating any restrictions as to the plant outlay to thereby result in improved productivity.

These objects are attained by the characterizing features of claims 1 and 5, respectively. The subclaims refer to preferred embodiments. An important result, finally, is the possibility of varying the range of appliances to be manufactured with considerably reduced investment regarding the equipment required for finishing the product.

Further objects and characteristics of the invention will become evident from the following description given by way of example with reference to the accompanying drawings, wherein:
- Fig. 1:: shows a housing of a refrigerating appliance made by the method and by the use of apparatus according to the invention,
- Figs.2-4:: show diagrammatic perspective views of the main steps of the manufacturing method according to the invention,
- Fig.5:: shows a diagrammatic perspective view of a device according to the invention for the assembly of a housing, and
- Fig. 6:: shows a diagrammatic perspective view of a foam-injection device used in the method according to the invention.

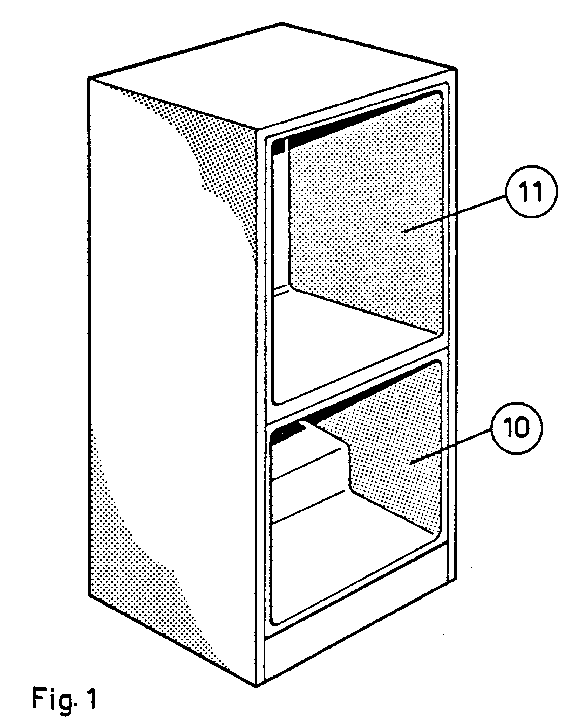

The invention is described with reference to the manufacture of a housing (Fig. 1) of a refrigerating appliance having two compartments 10 and 11 disposed above one another, namely, a refrigerator compartment for preserving fresh foods at a temperature of about +5^{o}C, and a freezer compartment for preserving frozen foods at a temperature of at least -18^{o}C.

The housing is composed of an inner casing made by heat-forming a plastic sheet material in a conventional manner not essential to the present invention, and outer walls usually made of suitable formed metal sheet panels. The space between the inner casing and the walls is filled with a thermo-insulating material such as polyurethane foam. The invention is particularly directed to the steps of assembling the component elements of the housing and injecting the insulating foam material. The basic idea underlying the invention is to render the assembling operation more versatile by using a single device capable of adaptation to different types of housing to be manufactured, and to render the foam-injecting operation completely independent of the variable type of housings by the use of a device which does not require any modifications in the course of the manufacturing process.

The proposed solution permits the workpieces to be conveyed between subsequent process stations by means of wire-controlled electric carriages to thereby eliminate the conventionally employed fixed conveyor and handling systems imposing rigid restrictions on the plant outlay. It is thus intended to permit the manufacturing process to be substantially automatized under the control of a data processing system including a central electronic computer connected to local operating units.

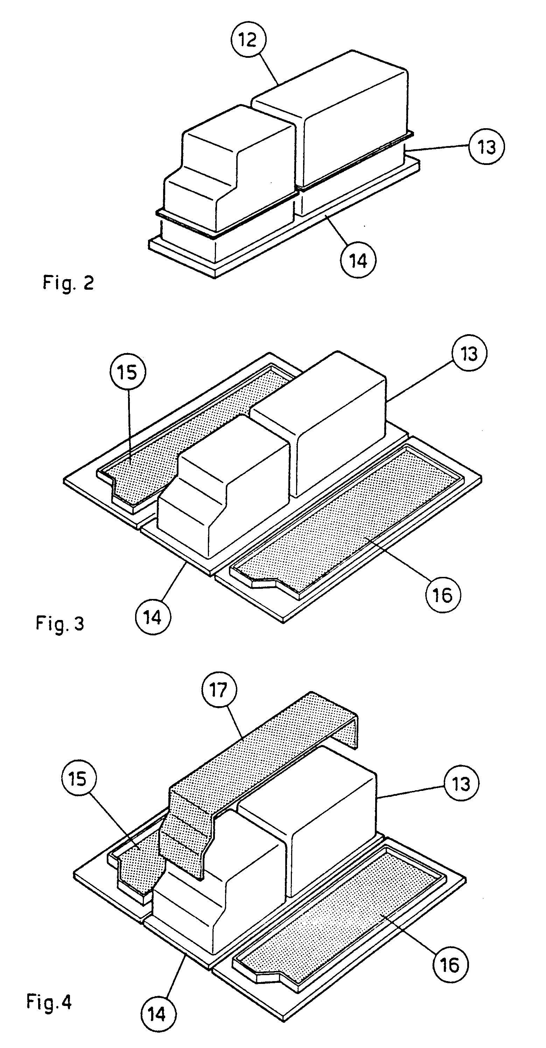

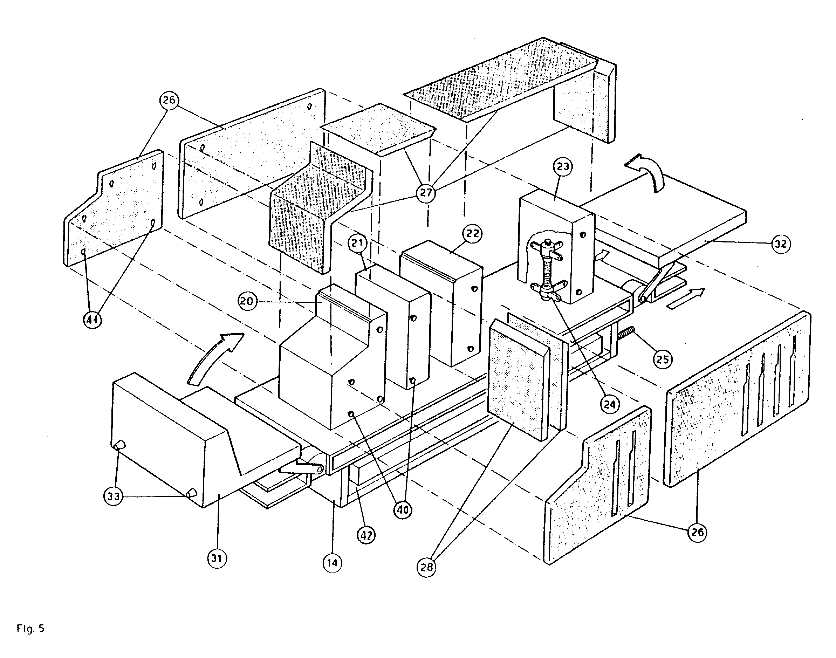

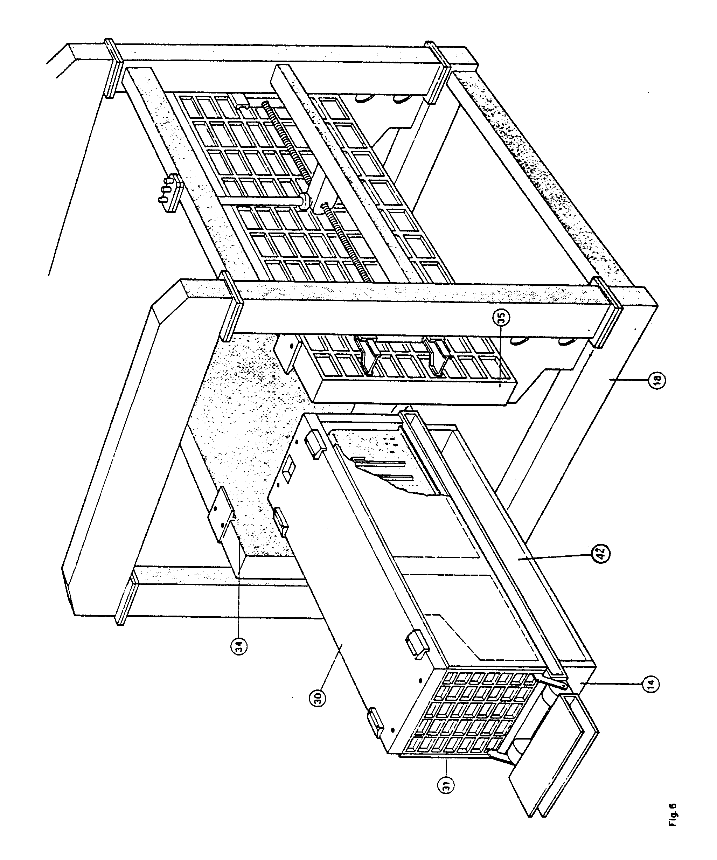

According to the method of the invention as depicted in Figs. 2 - 4, an inner casing 12 of a housing is mounted on a support core 13 carried by a support base 14. A subsequent step consists in assembling outer walls 15, 16, 17 about inner casing 12 so as to leave a hollow space between the casing and the walls. The housing thus assembled on support core 13 is subsequently conveyed, while being still carried on support base 14, to a foam-injecting station 18 (Fig.6), whereat the assembly is initially preheated, whereupon the insulating material is injected into the hollow spaces between the inner casing and the outer walls. These manufacturing steps are facilitated by the use of a novel construction of support core 13 and support base 14. As shown in Fig. 5, the support core is composed of modular elements of fixed dimensions and liner panels of variable dimensions corresponding to those of different housings to be manufactured. In the specific case shown, the support core is composed of two modular elements 20, 21 for forming the lower portion of a housing including a cavity for accommodating a compressor, and two modular elements 22,23 for forming the upper portion of the housing.

Modular elements 20 - 23 are mounted on support base 14 by the use of actuator means 24 of the type for instance comprising articulated levers operated by a motor-driven threaded shaft 25 mounted in support base 14. The modular elements are thus automatically displaceable for adaptation to the dimensions of a housing to be manufactured. The support core additionally comprises a plurality of liner panels 26, 27, 28 the dimensions of which are variable to correspond to those of the housing to be manufactured. Panels 26 are adapted to be secured to elements 20 - 23 by the use of engagement means for instance of the pin and socket type 40 - 41. Panels 27 and 28 are engaged with panels 26 along complementary chamfered edges. In particular, panels 28 are disposed transversely between elements 20-21 and 22-23 for forming the partition between the two compartments 10 and 11 of the finished housing. The preparation of the support core may thus be accomplished by simple automatized operations, including the completion of the lining of the core, with the exeption of the lower surface resting on support base 14 so as to form the openings of the compartments 10 and 11 of the housing. These openings are later to be closed by conventional doors mounted on the housing in a concluding phase of the manufacturing process. After supplying inner casing 12 from a heat-forming station and mounting it on support core 13 in an automatized process, outer walls 15, 16 and rear wall 17 of the housing are assembled about the casing ( Figs.2-4). The walls are positioned about the inner casing with the aid of suitable stops and seats or the like on support base 14, in which the edges of the walls are received so as to leave a hollow space between the inner casing and the walls, to be Subsequently filled with an insulating material.

The thus obtained assembly is closed on top by means of a cover plate 30 (Fig. 6) of selected dimensions corresponding to those of the housing to be manufactured and normally carried in a lower compartment 42 of support base 14. The latter is additionally provided with pivotable end plates 31 and 32 provided with pins 33 for engagement with cover plate 30 (Fig. 5) for completing the structure to be conveyed to the foam-injection station. In addition to being pivotable, end plate 32 is preferably displaceable in the longitudinal direction for adaptation to different heights of the housings to be manufactured. This end plate 32 forms the upper closure of the housing.

The structure thus finished at the assembly station is subsequently transferred to the foam-injection station 18 Fig. 6) by means of a wire-controlled electric carriage. The foam-injection unit 18 is of extremely simplified construction, requiring only two lateral walls 34, 35 for completing the foam-injection mould to ensure the stabilization of the workpiece during this step of the manufacturing process. The walls 34 and 35 are automatically displaceable by conventional means such as travelling nuts cooperating with a motor-driven threaded shaft.

In conclusion, the method and apparatus according to the invention permit maximum flexibility of the manufacturing process to be achieved, they allow a more rational installation of the various operative units, resulting in a saving of operating time and a corresponding increase of productivity.

## Claims

1. A method for the manufacture of refrigerating cabinets of the type including an inner casing of thermoformed plastic, outer walls spaced from the casing and foamed insulation material filling the space between the casing and the outer walls, the method including fixedly mounting the previously formed casing of a particular shape on a support core including a support base and having dimensions adapted to the casing, positioning the outer walls about the casing to define the space, and locating the thus formed assembly in a foaming jig adapted to the shape of the formed assembly and foaming insulating material into the space, wherein by employing a single support core for supporting casings of a plurality of different shapes is employed
and said single support core is provided with modular elements mounted on the support base, **characterized by** said modular elements being permanently but displaceably mounted on said support base, and
prior to mounting the casing on the core, adjusting the dimensions defined by the modular elements to the dimensions of the particular casing, by selectively displacing at least some of the modular elements along the support base to given positions, and then fitting on the thus positioned modular elements lining panels having dimensions to define the dimensions of the support core adapted to the particular casing.

2. The method claimed in claim 1, further comprising partially forming the foaming jig by means of plates located on the support base.

3. The method claimed in claim 2, wherein the partially forming comprises moving opposite end plates pivotally mounted on the support base to positions confronting opposite ends of the formed assembly, and moving a cover plate from a position supported by the support base to a position connected to the end plates and covering the top of the formed assembly.

4. The method claimed in claim 3, further comprising moving the support base and the thus partially formed foaming jig to a foaming location and thereat moving side plates toward the formed assembly, thereby completing formation of the foaming jig.

5. An apparatus for use in the manufacture of refrigerating cabinets of the type including an inner casing (12) of thermoformed plastic, outer walls (15-17) spaced from the casing and foamed insulation material filling the space between the casing and the outer walls, the apparatus including a support core (13) including a support base (14) and modular members (20-23) mounted on said support base (14), and having dimensions adapted to a particular shape of the previously formed casing for fixedly supporting the casing, **characterized in that** said modular members (20-23) are permanently but displaceably mounted on said support base (14), and that the support core (13) comprises:
actuator means (24) for variably positioning at least some of said modular members (20-23) along the support base (14), lining panels (26-28) having dimensions to define the dimension of the support core (13) for a particular housing shape, and means (40,41) for fitting the lining panels (26-28) to the modular members (20-23).

6. An apparatus as claimed in claim 5, wherein the actuator means comprises a threaded shaft (25) rotatably mounted on the support base (14), and threaded transmission means driven by the shaft (25) and connected to the modular members (20-23), such that rotation of the shaft (25) causes displacement of the modular members along the support base (14).

7. An apparatus as claimed in claim 5, wherein the fitting means comprise slots (41) formed in one of the modular members or the lining panels, and pins (40) extending from the other of the lining panels or modular members into respective slots.

8. An apparatus as claimed in claim 5, further comprising means (32, 33) on the support base (14) for partially forming a foaming jig about an assembly of a housing supported on the core (13) and outer walls (15-17) supported on the support base (14) about the casing (12).

9. An apparatus as claimed in claim 8, wherein the partially forming means comprises opposite end plates (32,33) pivotally mounted on the support base (14) for movement to positions confronting opposite ends of the assembly, one of the end plates further being mounted for movement longitudinally with respect to the support base (14).

10. An apparatus as claimed in claim 9, wherein the partially forming means further comprises a cover plate (30) removably mounted in a storage position on the support base (14) and removable therefrom to a position connected to the end plates (32,33) in the confronting positions thereof to cover the top of the assembly.

## Patentansprüche

1. Verfahren zur Herstellung von KühIgehäusen der Art, die ein Innengehäuse aus hitzgegeformtem Kunststoff, von dem Gehäuse räumlich getrennte Außenwände, und ein den Raum zwischen dem Gehäuse und den Außenwänden fullendes geschäumtes Isoliermaterial enthält, wobei das Verfahren die feste Montage des zuvor geformten Gehäuses von bestimmter Form auf einen, eine Haltebasis einschließende und eine dem Gehäuse angepaßte Größe aufweisenden, Haltekern, die Anordnung der Außenwände um das Innengehäuse herum, um den Zwischenraum abzugrenzen, die Verlegung des so gebildeten Aufbaus in eine, der Form des gebildeten Aufbaus angepaßte, Schäum-Einspannvorrichtung, und das Ausschäumen des Hohlraums mit lsoliermaterial umfaßt, wobei bei der Anwendung ein einzelner Haltekernzum Halten von Gehäusen melurerer unterschiedlicher Formen verwendet wird
und der einzelne Stutzkern mit an der Haltebasis befestigten Modulelementen versehen ist, **dadurch gekennzeichnet**, **daß** die Modulelemente dauerhaft aber versetzbar an der Haltebasis befestigt werden, und
die durch die Modulelemente definierte Größe, vor der Befestigung des Gehäuses an dem Kern, der Größe eines speziellen Gehäuses durch wahlweises Versetzen mindestens einiger der Modulelemente entlang der Haltebasis an vorgegebene Positionen angeglichen wird, und den so positionierten Modurelementen Verkleidungsplatten angepaßt werden, die eine Größe besitzen, die die Größe des dem speziellen Gehäuse angepaßten Haltekerns festlegen.

2. Verfahren nach Anspruch 1, desweiteren umfassend die teilweise Bildung der Schäum`Einspannvorrichtung mittels an der Haltebasis befindlicher Platten.

3. Verfahren nach Anspruch 2, wobei die teilweise Bildung urnfaßt: Bewegen gegenüberliegender Endplatten, die schwenkbar an der Haltebasis befestigt sind, in Positionen, die gegenüberliegenden Enden des gebildeten Aufbaus gegenüberstehen, und Bewegen einer Deckplatte aus einer durch die Haltebasis gehaltenen Position in eine mit den Endplatten verbundene Position, in der sie die Oberseite des gebildeten Aufbaus abdeckt.

4. Verfahren nach Anspruch 3, desweiteren umfassend den Transport der Stützbasis und der auf diese Weise teilgebildeten Schäum-Einspannvorrichtung an eine Schäumstelle und dort die Bewegung von Seitenplatten gegen den gebildeten Aufbau, wodurch die Bildung der Schäum-Einspannvorrichtung vervollständigt wird.

5. Vorrichtung zur Verwendung bei der Herstellung von Kühlgehäusen der Art, die ein Innengehäuse (12) aus hitzegeformtem Kunststoff, von dem Gehäuse räumlich getrennte Außenwände (15-17), und ein den Raum zwischen dem Gehäuse und den Außenwänden füllendes, geschäumtes Isoliermaterial aufweist, wobei die Vorrichtung einen Haltekern (13) umfaßt, der eine Haltebasis (14) und Modulteile (20-23) enthält, die an der Haltebasis (14) befestigt und in ihrer Größe der speziellen Gestalt des vorher geformten Gehäuses angepaßt sind, um das Gehäuse fixiert zu halten, **dadurch gekennzeichnet, daß** die Modulteile (20-23) an der Haltebasis (14) beständig aber versetzbar befestigt sind, und der Haltekern (13) enthält:
eine Stelleinrichtung (24) zur variablen Anordnung mindestens einiger der Modulteile (20-23) entlang der Haltebasis (14), Verkleidungsplatten (26-28), die eine Größe besitzen, die die Größe des Haltekerns (13) für eine spezielle Gehäuseform festlegen, und Einrichtungen (40,41) zum Anpassen der Verleidungsplatten (26-28) an die Modulteile (20-23).

6. Vorrichtung nach Anspruch 5, wobei die Stelleinrichtung einen an der Haltebasis (14) drehbar montierten Gewindeschaft (25), und durch den Schaf: (25) angetriebene und mit den Modulteilen (20-23)verbundene Gewindeübersetzungseinrichtungen der Art umfaßt, daß die Rotation des Schafts (25) eine Verschiebung der Modulteile entlang der Haltebasis (14) bewirkt.

7. Vorrichtung nach Anspruch 5, wobei die Einpasseinrichtungen Aussparungen (41), die in eines der Modulteile oder die Verldeidungsplatten eingeformt sind, und Bolzen (40) umfassen, die aus den anderen Verkleidungsplatten oder Modulteilen in die jeweiligen Aussparungen hineinragen

8. Vorrichtung nach Anspruch 5, desweiteren auf der Haltebasis (14) Einrichtungen (31,32) umfassend, zur teilweisen Bildung einer Schäum-Einspannvorrichtung um einen Aufbau eines von dem Kern (13) gehaltenen Gehäuses, und von der Haltebasis (14) um das Gehäuse (12) herum gehaltenen Außenwänden (15-17) herum.

9. Vorrichtung nach Anspruch 8, wobei die teilformende Einrichtung gegenüberliegende Endplatten (31,32) umfaßt, die an der Haltebasis (14) schwenkbar befestigt sind, für eine Bewegung in Positionen, in denen sie entgegengesetzten Enden des Aufbaus gegenüberstehen, wobei eine der Endplatten desweiteren für Längsbewegungen bezüglich der Haltebasis (14) angebracht ist.

10. Vorrichtung nach Anspruch 9, wobei die teilformende Einrichtung desweiteren eine Deckplatte (30) umfaßt, die in einer Lagerposition auf der Haltebasis (14) herausnehmbar angebracht, und von dort in eine mit den Endplatten (31,32), in deren einander gegenübergestellten Lage, verbundene Position. bewegbar ist, um die Oberseite des Aufbaus abzudecken.

## Revendications

1. Un procédé pour la fabrication d'armoires frigorifiques du type constitué d'un coffrage intérieur en plastique thermoformé, de parois extérieures séparées du coffrage et d'une mousse isolante remplissant l'espace entre le coffrage et les parois extérieures, le procédé comportant la fixation d'un coffrage à laquelle une forme particulière a été préalablement donnée sur une armature support combinée à un socle et ayant des dimensions adaptées au coffrage, le positionnement des parois extérieures autour du coffrage de façon à définir l'espace, la mise en Place de l'ensemble ainsi formé dans un gabarit d'injection de mousse adapté à la forme de l'ensemble formé et l'injection de matière isolante dans l'espace, où une unique armature support est utilisée pour supporter des coffrages de plusieurs formes différentes
et cette unique armature support est munie d'éléments modulaires montés sur le socle, **caractérisé en ce que** ces éléments modulaires sont montés de façon permanente mais déplaçable sur le socle, et
avant la fixation du coffrage sur l'armature, le réglage des dimensions définies par les éléments modulaires aux dimensions du coffrage particulier, par déplacement sélectif d'au moins une partie des éléments modulaires le long du socle à des emplacements donnés, puis le montage sur les éléments modulaires ainsi positionnés de panneaux de garnissage ayant des dimensions définissant les dimensions de l'armature support adaptées au coffrage particulier.

2. Le procédé de la revendication 1, comprenant en outre le formage partiel du gabarit d'injection de mousse au moyen de tôles placéees sur le socle.

3. Le procédé de la revendication 2, où le formage partiel comporte le déplacement de tôles en vis-à-vis pouvant pivoter sur le socle à des emplacements situés face aux extrémités opposées de l'ensemble formé, et le déplacement d'une tôle de recouvrement d'un emplacement supporté par le socle à un emplacement relié aux tôles d'extrémité et recouvrant la partie supérieure de l'ensemble formé.

4. Le procédé de la revendication 3, comportant en outre le transfert du socle et du gaberit d'injection partiellement formé dans un poste d'injection et, dans ce poste, le déplacement de tôles lotérales vers l'ensemble formé, parachevant ainsi le gabarit d'injection.

5. Un dispositif à utiliser dans la fabrication d'armoires frigorifiques du type constitué d'un coffrage intérieur (12) en plastique thermoformé, de parois extérieures (15-17) séparées du coffrage et d'une mousse isolante remplissant l'espace entre le coffrage et les Parois extérieures, le dispositif comportant une armature support (13) comprenant un socle (14) et des éléments modulaires (20-23) montés sur ce socle (14), et ayant des dimensions adaptées à une forme particulière du coffrage préalablement formé pour supporter de façon fixe le coffrage, **caractérisé en ce que** ces éléments modulaires (20-23) sont montés de façon permanente mais déplaçable sur le socle (14), et que l'armature support (13) comprend :
un moyen de commande (24) pour positionner de façon variable au moins une partie de ces éléments modulaires (20-23) ainsi que le socle (14), les panneaux de garnissage (26-28) ayant des dimensions définissant la dimension de l'armature support (13) pour une forme de cuve particulière, et un moyen (40, 41) de fixer les panneaux de garnissage (26-28) aux éléments modulaires (20-23).

6. Un dispositif selon la revendication 5, où le moyen de commande est constitué d'un arbre fileté (25) monté en rotation sur le socle (14), et un moyen de transmission fileté entraîné par l'arbre (25) et raccordé aux éléments modulaires (20-23), de telle sorte que la rotation de l'arbre (25) provoque le déplacement des éléments modulaires le long du socle (14).

7. Un dispositif selon la revendication 5, où le moyen de fixation est constitué de fentes (41) pratiquées dans un des éléments modulaires ou des panneaux de garnissage, et de goupilles (40) partant de l'autre panneaux de garnissage ou élément modulaire pour pénétrer dans les fentes correspondantes.

8. Un dispositif selon la revendication 5, comprenant en outre un moyen (32, 33) placé sur le socle (14) pour former partiel lement un gabarit d'injection autour d'un ensemble de cuve supporté par l'armature (13) et les parois extérieures (15-17) supportées par le socle (14) autour du coffrage (12).

9. Un dispositif selon la revendication 8, où le moyen de formage partiel comprend des tôles d'extrémité en vis-à-vis (32, 33) pouvant pivoter sur le socle (14) pour venir à des emplacements faisant face aux extrémités opposées de l'ensemble, une des tôles d'extrémité étant en outre montée de façon à se déplacer longitudinalement par rapport au socle (14).

10. Un dispositif selon le revendication 9, où le moyen de formage partiel comprend en outre une tôle de recouvrement (30) montée de façon amovible en position de rengement sur le socle (14) et séparable de celuici pour venir à un emplacement relié aux tôles d'extrémité (32, 33) en vis-à-vis pour recouvrir la partie supérieure de l'ensemble.
